# EUROPÄISCHE PATENTSCHRIFT

(11) **EP 0 366 976 B1**
(45) Veröffentlichungstag und Bekanntmachung des Hinweises auf die Patenterteilung: **10.07.1996**
(21) Anmeldenummer: 89118685.0
(22) Anmeldetag: 07.10.1989
(51) Int. Cl.: G06T 9/00

(54) **Transformationsschaltung**
Transformation circuit
Circuit pour transformée

(30) Priorität: 03.11.1988 DE 3837328
(43) Veröffentlichungstag der Anmeldung: 09.05.1990
(73) Patentinhaber: ROBERT BOSCH GMBH, 70442 Stuttgart (DE)
(72) Erfinder: Vogt, Wilhelm, D-4791 Herbram (DE); Biere, Dietmar, Dr., D-3200 Hildesheim (DE)
(74) Vertreter: Friedmann, Jürgen, Dr.-Ing.

(56) Entgegenhaltungen:
- EP-A- 0 289 629
- WO-A-80/00758
- IEEE TRANSACTIONS ON COMPUTERS; IEEE COMPUTER SOCIETY PRESS Bd. 37, Nr. 9, September 1988, NEW YORK, US, Seiten 1145-1148; G.F.TAYLOR ET AL: 'AN ARCHITECTURE FOR A VIDEO RATE TWO-DIMENSIONAL FAST FOURIER TRANSFORM PROCESSOR'

## Beschreibung

Die Erfindung betrifft eine Transformationsschaltung für eine Einrichtung zur Codierung oder Decodierung von Videosignalen.

Zur Übertragung von Bildern, beispielsweise beim Schmalband-Bildtelefon, sind verschiedene datenreduzierende Codierverfahren bekannt geworden. Ein wesentliches Element verschiedener bekannter Codierverfahren ist eine blockweise Transformation der zu übertragenden Videosignale. Dazu werden beispielsweise Blöcke von 16 mal 16 Bildelementen gebildet, die jeweils in einer datenreduzierenden Weise transformiert werden. Eine dieser Transformationen ist die diskrete Cosinus-Transformation. Zur Durchführung der diskreten Cosinus-Transformation wie auch anderer Transformationen ist eine zweimalige Matrix-Multiplikation erforderlich, die mit erheblichem Rechenaufwand verbunden ist.

Aus IEEE Transactions on Computers; IEEE Computer Society Press, Band 37, Nr. 9, September 1988, New York, USA, Seiten 1145 bis 1148; G.F. Taylor et al: "An Architecture for a Video Rate Two-Dimensional Fast Fourier Transform Processor" ist es bekannt zur blockweisen Fast Fourier Transformation eine parallele Anordnung mehrerer digitaler Signalprozessoren zu verwenden. Die Daten werden den Signalprozessoren von einem ersten gemeinsamen Zwischenspeicher zugeführt. Außerdem sind Daten in einen zweiten gemeinsamen Zwischenspeicher einschreibbar.

Aufgabe der vorliegenden Erfindung ist es, eine Transformationsschaltung für eine Einrichtung zur Codierung oder Decodierung anzugeben, bei welcher die Matrix-Multiplikationen mit möglichst geringem Aufwand durchgeführt werden können. Diese Aufgabe wird durch die Merkmale des Anspruches 1 gelöst.

Die erfindungsgemäße Transformationsschaltung mit den Merkmalen des Hauptanspruchs hat den Vorteil, daß handelsübliche integrierte digitale Signalprozessoren verwendet werden können. Außerdem kann die erfindungsgemäße Transformationsschaltung in einfacher Weise an unterschiedliche Blockgrößen und Transformationsarten angepaßt werden.

Durch die in den Unteransprüchen aufgeführten Maßnahmen sind vorteilhafte Weiterbildungen und Verbesserungen der im Hauptanspruch angegebenen Erfindung möglich.

Bei einem Coder für ein Schmalband-Bildtelefon, bei welchem eine Prädiktionsschleife mit einer Schaltung zur diskreten Cosinus-Transformation und einer Schaltung zur inversen diskreten Cosinus-Transformation vorgesehen ist, können beide Schaltungen in gleicher Weise mit der Erfindung realisiert werden, wobei für das Luminanzsignal für die DCT und die IDCT jeweils vier Signalprozessoren verwendet werden, während für die Chrominanzignale wegen der geringen Blockgröße von 8 mal 8 Bildelementen jeweils eine Schaltung mit zwei Signalprozessoren für die DCT und für die IDCT ausreichend ist. Entsprechendes gilt für einen Decoder. Je nach Bedarf im einzelnen - beispielsweise bei größeren Blöcken - können auch mehr als vier Signalprozessoren zusammenwirken, ohne die Lehre der Erfindung zu verlassen.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer Sendeeinrichtung für ein Schmalband-Bildtelefon,
- Fig. 2: ein Blockschaltbild eines Ausführungsbeispiels einer erfindungsgemäßen Transformationsschaltung,
- Fig. 3: eine Aufstellung von Gleichungen der diskreten Cosinus-Transformation,
- Fig. 4: eine schematische Darstellung der Matrix-Multiplikationen und
- Fig. 5: einen Ablaufplan eines Programms für die Signalprozessoren.

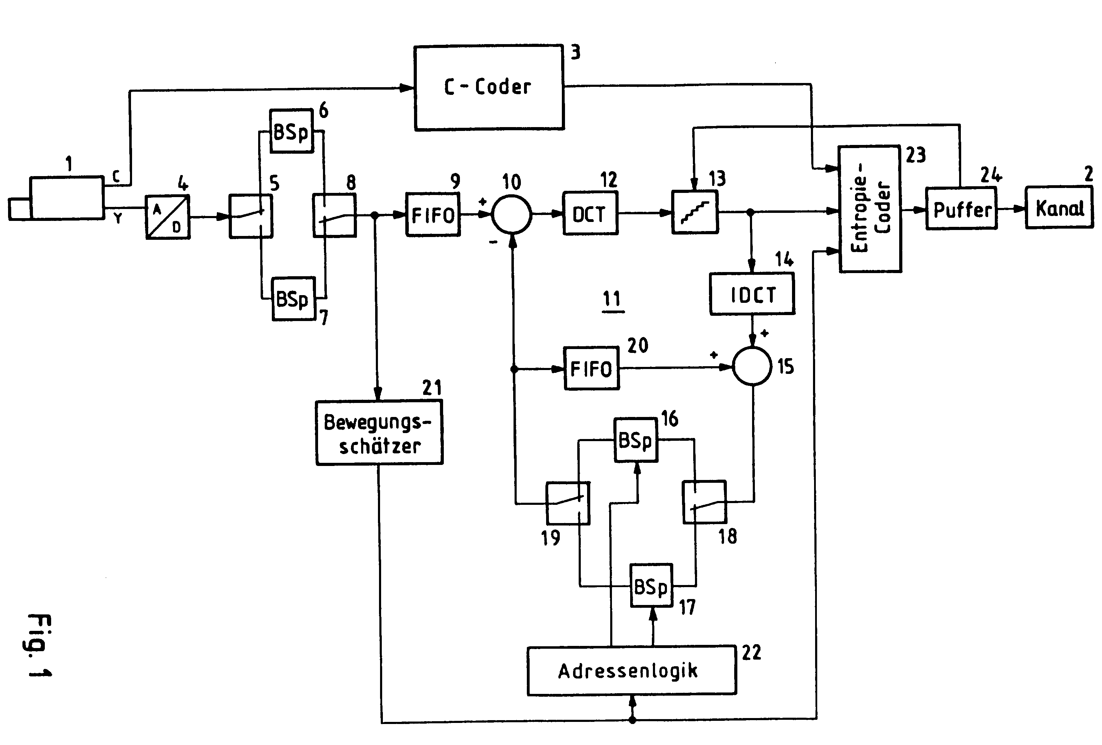

Die in Fig. 1 dargestellte Schaltungsanordnung stellt eine Sendeeinrichtung für ein Schmalband-Bildtelefon dar, wobei die Ausgangssignale einer Videokamera 1 analog/digital-gewandelt und anschließend unter Anwendung datenreduzierender Verfahren derart codiert werden, daß sie über einen schmalbandigen Kanal 2 zu einem Empfänger übertragen werden können. Die im Zusammenhang mit der Schaltungsanordnung nach Fig. 1 genannten Zahlenangaben beziehen sich auf die sogenannte CIF-Auflösung von 360 x 288 Bildelementen für den Luminanzanteil und von jeweils 180 x 144 Bildelementen für die Chrominanzanteile U, V. Die Kapazität des Übertragungskanals 2 beträgt 64000 Bit/s.

Zur Reduzierung des Datenstroms tragen im wesentlichen die folgenden bekannten Verfahren bei: Reduzierung der Bewegungsauflösung (es wird nur jedes dritte Bild übertragen), DPCM (Interframe), diskrete Cosinus-Transformation (DCT), adaptive Quantisierung und Entropie-Codierung. Ferner ist eine Umschaltung auf eine Intraframe-Codierung vorgesehen.

Die Codierung des Luminanzsignals wird im folgenden anhand einzelner Funktionseinheiten erläutert, während die Codierung der Chrominanzsignale U, V nur durch eine Funktionseinheit 3 dargestellt ist, da diese Codierung in ähnlicher Weise wie die Codierung des Luminanzsignals Y erfolgt.

Die Ausgangssignale des Analog/Digital-Wandlers 4 werden über einen Umschalter 5 bildweise abwechselnd in einen von zwei Bildspeichern 6, 7 eingeschrieben. Durch entsprechende Steuerung eines weiteren Umschalters 8 sowie im einzelnen nicht dargestellte Adressierung beim Auslesen wird jedes dritte Bild aus den Speichern 6, 7 ausgelesen, so daß sich bereits eine Datenreduktion um den Faktor 3 ergibt.

Nach einer Zwischenspeicherung zur Zeitanpassung in einem FIFO-Speicher 9 gelangen die Signale zu einer Subtraktionsschaltung 10, welche Teil einer Prädiktionsschleife 11 ist. In einer Schaltung 12 zur diskreten Cosinus-Transformation werden die Ausgangssignale der Subtraktionsschaltung - also die Differenzen zwischen dem jeweils von der Kamera erzeugten Signal und dem Signal eines gespeicherten Bildes - blockweise transformiert. Zu einem Block gehören jeweils n Bildelemente aus n aufeinanderfolgenden Zeilen, die eine Teilfläche des Bildes von n x n Bildelementen darstellen. Meistens werden Blöcke der Größe 8 x 8 Bildelemente vorgeschlagen. Bei der Realisierung der Erfindung haben sich für die Luminanz Blöcke von 16 x 16 Bildelementen und für die Chrominanz jeweils 8 x 8 Bildelemente große Blöcke als günstig herausgestellt.

Da die diskrete Cosinus-Transformation an sich bekannt ist (siehe Ahmed N., Natarajan T. und Rao R.: Discrete Cosine Transform, IEEE Transactions C-23 (1974), Seiten 90 bis 93), sei im folgenden nur kurz erwähnt, daß durch die diskrete Cosinus-Transformation jeweils für einen Block aus n x n Bildelementen Koeffizienten ermittelt werden, welche dem Gleichanteil des Signals (also der mittleren Helligkeit), der Amplitude einer Grundwelle, deren Periode der doppelten Blocklänge entspricht, und den Amplituden der Oberwellen entsprechen. Je nach Bildinhalt nimmt die Amplitude der Oberwellen mit der Ordnungszahl der jeweiligen Oberwelle mehr oder weniger stark ab, so daß für einen großen Anteil der Blöcke nur der Gleichanteil, die Grundwelle und/oder wenige Oberwellen zu übertragen sind.

Die Ausgangssignale der Schaltung 12 werden einem steuerbaren Quantisierer 13 zugeführt, der in Abhängigkeit von einem zugeführten Steuersignal eine gröbere oder feinere Quantisierung vornehmen kann. Die quantisierten Signale werden dann innerhalb der Prädiktionsschleife 11 einer Schaltung 14 zur inversen diskreten Cosinus-Transformation zugeleitet und über eine Addierschaltung 15 in weitere Bildspeicher 16, 17 eingelesen. Die Bildspeicher 16, 17 stellen einen Prädiktionsspeicher dar. Es werden zwei Bildspeicher verwendet, um ein Lesen zu ermöglichen, während neue Signale eingeschrieben werden. Dazu werden die Umschalter 18, 19 entsprechend gesteuert. Die aus dem Prädiktionsspeicher 16, 17 ausgelesenen Signale gelangen zur Subtraktionsschaltung 10 und über einen zur Zeitanpassung dienenden FIFO-Speicher 20 zur Addierschaltung 15.

Um eine genauere Prädiktion auch bei bewegten Bildern zu erhalten, ist ein Bewegungsschätzer 21 vorgesehen, der durch Vergleich aufeinanderfolgender Bilder jeweils für einen Block einen Bewegungsvektor erzeugt. Die Bewegungsvektoren werden einer Adressierlogik 22 zugeführt, so daß beim blockweisen Lesen der Signale aus dem Prädiktionsspeicher 16, 17 bereits eine durch Bewegung verursachte Verschiebung des Inhalts des jeweiligen Blocks zwischen dem gespeicherten und dem jeweils aktuellen Bild berücksichtigt wird.

Die Ausgangssignale des Quantisierers 13, des Coders 3 für die Chrominanzsignale U, V sowie die Ausgangssignale des Bewegungsschätzers 21 werden einem Entropie-Coder 23 zugeführt, bei welchem eingehende Codewörter entsprechend der Häufigkeit ihres Auftretens in kürzere bzw. längere ausgehende Codewörter gewandelt werden.

Da die durch die Codierung entstehenden Daten je nach Auftreten von Bewegung und Details im aufgenommenen Bild unregelmäßig anfallen, ist ein Pufferspeicher 24 vor der Übertragungsstrecke 2 vorgesehen, der beispielsweise die Kapazität eines Bildes aufweist. Droht der Pufferspeicher 24 überzulaufen, so wird die dem Puffer zugeführte Datenmenge reduziert, was insbesondere durch eine entsprechende Steuerung des Quantisierers 13 erfolgen kann.

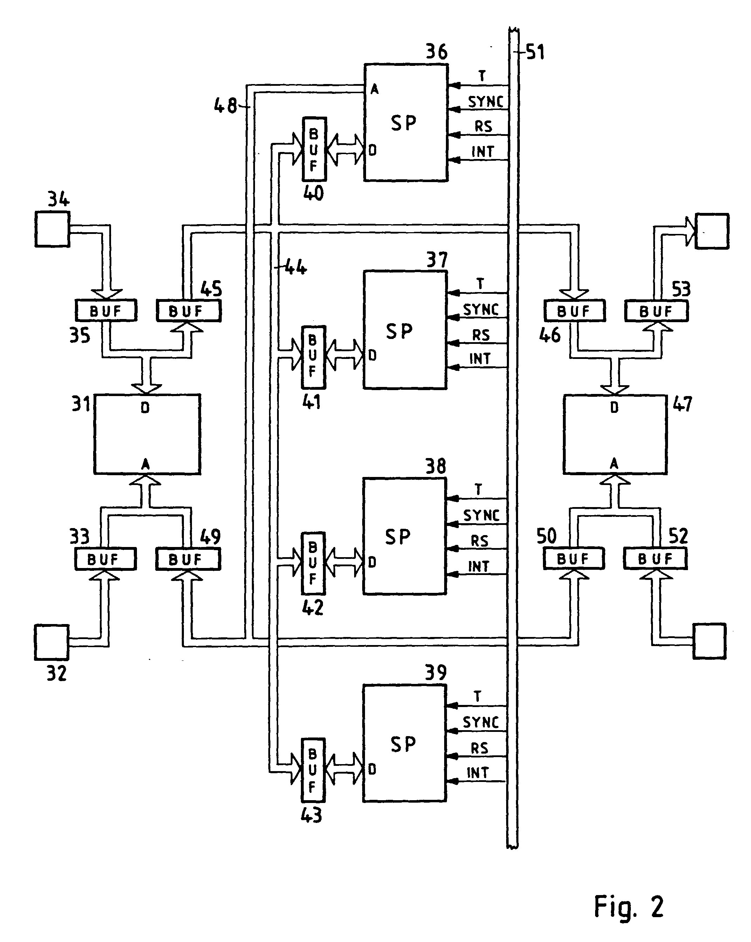

Die in Fig. 2 dargestellte Transformationsschaltung kann sowohl zur DCT (Schaltung 12, Fig. 1) oder zur IDCT (Schaltung 14, Fig. 1) verwendet werden. Es sind lediglich unterschiedliche Programme für die Signalprozessoren erforderlich. Die Signale des jeweils zu transformierenden Blocks werden in einen ersten Zwischenspeicher 31 von der jeweils vorangegangenen Schaltung eingeschrieben. Dazu werden entsprechende Adressen über einen Eingang 32 und einen Bustreiber 33 dem Adresseneingang A des Zwischenspeichers zugeführt, während die Daten von einem Eingang 34 über einen Bustreiber 35 zum Daten-Ein/Ausgang D des Zwischenspeichers 31 gelangen.

Vier digitale Signalprozessoren 36, 37, 38, 39 sind mit ihren Daten-Ein/Ausgängen D über jeweils einen bidirektionalen Bustreiber 40, 41, 42, 43 mit einem Datenbus 44 verbunden, an den ferner über einen Bustreiber 45 der Daten-Ein/Ausgang D des ersten Zwischenspeichers 31 und über einen weiteren Bustreiber 46 der Daten-Ein/Ausgang des zweiten Zwischenspeichers 47 anschließbar sind. Außer der Berechnung von Koeffizienten ist im Signalprozessor 36 eine Erzeugung von Adressen zum Auslesen aus dem ersten Zwischenspeicher 41 und zum Einschreiben in den zweiten Zwischenspeicher 47 vorgesehen. Die Adressen werden über einen Adressenbus 48 und je einen Bustreiber 49, 50 den Zwischenspeichern zugeführt.

Jeder der Signalprozessoren 36 bis 39 erhält ein Taktsignal T mit einer Frequenz von beispielsweise 40 MHz. Beim Einschalten werden ferner den Signalprozessoren ein Synchronsignal SYNC und ein Rücksetzsignal RS zugeführt. Außerdem wird zu Beginn jeden Blocks über ein Signal INT ein Interrupt ausgelöst. Die Erzeugung dieser Signale, die über einen Steuerbus 51 den Signalprozessoren 36 bis 39 zugeführt werden, ist an sich bekannt und braucht zur Erläuterung der Erfindung im einzelnen nicht näher ausgeführt zu werden. Im Zusammenhang mit dem Signal INT wird auf die von der Anmelderin eingereichte Patentanmeldung P 38 27 219.9 hingewiesen, in welcher eine Schaltungsanordnung beschrieben ist, mit welcher Taktimpulsfolgen für einzelne Funktionseinheiten eines Schmalband-Bildtelefons erzeugt werden.

Aus dem zweiten Zwischenspeicher 47 werden die Koeffizienten von der nachfolgenden Schaltung abgerufen, wozu ein Bustreiber 52 für die Adressen und ein Bustreiber 53 für die Daten vorgesehen ist.

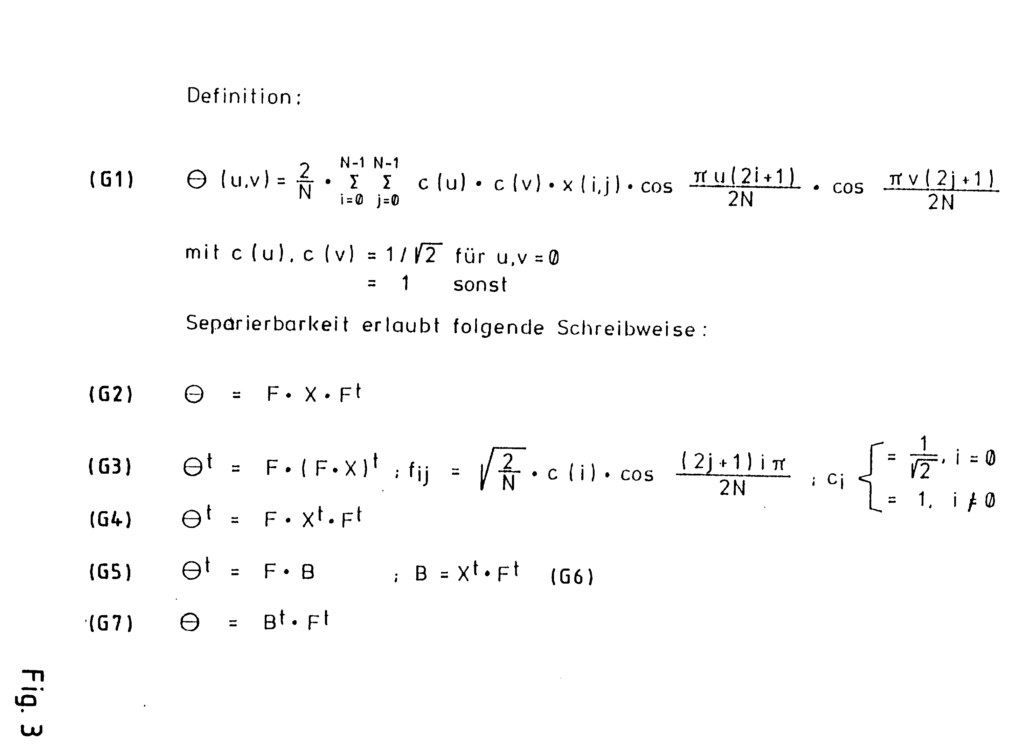

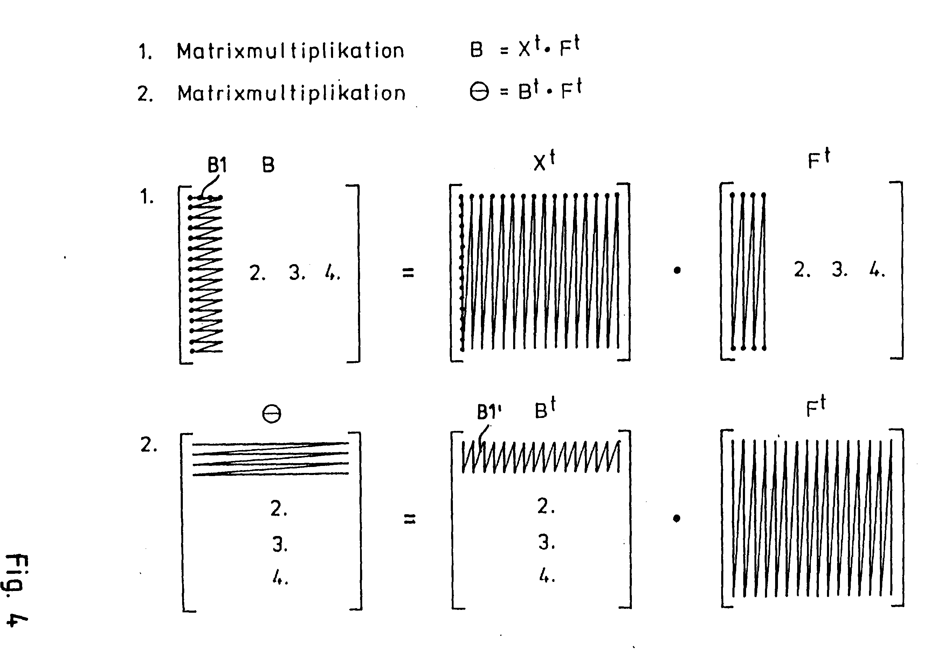

Der Algorithmus zur Berechnung der Transformation ist eine doppelte Matrix-Multiplikation, was im einzelnen später anhand der Figuren 3 und 4 erläutert wird. Die Koeffizienten der Cosinus-Matrix sind jeweils im Programmspeicher der Prozessoren abgelegt. Vorzugsweise sind Signalprozessoren des Typs TMS 320C25 geeignet. Die Struktur des Signalprozessors gestattet die schnelle Berechnung der Koeffizienten der Ergebnis-Matrix, da der Prozessor eine Multiplikation mit anschließender Akkumulation in einem Systemtaktzyklus von 100 ns ausführen kann. Jeder der Signalprozessoren übernimmt die Berechnung von jeweils einem Viertel der Ergebnis-Matrix. Dabei arbeiten die Prozessoren unabhängig voneinander, ohne Daten auszutauschen. Zusätzlich errechnet der Signalprozessor 36 Adressen für die Zwischenspeicher 31 und 47. Nach einem Interrupt werden die zu einem Block gehörenden Signalwerte (bei einem Block von 16 mal 16 Bildelementen also 256 Werte) in die Arbeitsspeicher aller Signalprozessoren eingelesen. Die berechneten Koeffizienten werden dann von den Signalprozessoren über den Datenbus 44 in den zweiten Zwischenspeicher 47 eingeschrieben.

In Fig. 3 stellt die Gleichung (G1) die diskrete Cosinus-Transformation dar, wobei Θ der jeweilige Koeffizient mit den Koordinaten u und v und x die Signalgröße eines Bildelementes mit den Koordinaten i und j ist. N² ist die Anzahl der Bildelemente eines Blocks.

Durch die Separierbarkeit der Gleichung ist die in (G2) angegebene Schreibweise erlaubt. Durch eine Umformung über die Gleichungen (G3) und (G4) wird dann gezeigt, daß die Koeffizienten-Matrix Θ gemäß Gleichung 7 durch Multiplikation der Matrix B^{t} mit F^{t} errechnet werden kann, wobei B wiederum ein Produkt der transponierten Matrix X mit der transponierten Matrix F darstellt (G6).

Die Multiplikationen gemäß den Gleichungen (G6) und (G7) werden jeweils für einen Teil der Matrix-Koeffizienten in einem der Signalprozessoren 36 bis 39 durchgeführt, was schematisch in Fig. 4 dargestellt ist. In einem ersten Schritt wird eine Teil-Matrix B1 durch Multiplikation eines Teils der Matrix F^{t} mit der gesamten Matrix X^{t} durchgeführt. Die Teil-Matrix B1 wird durch entsprechendes Auslesen aus dem Arbeitsspeicher in eine Teil-Matrix B1^{t} transponiert und mit der Matrix F^{t} multipliziert. Das Ergebnis stellt einen ersten Teil der Ergebnis-Matrix Θ dar. Ein zweiter, dritter und vierter Teil wird in entsprechender Weise mit Hilfe der weiteren Signalprozessoren gewonnen.

Durch die beschriebenen Umformungen ist eine optimale Durchführung der zwei Matrixmultiplikationen mit den eingesetzten Signalprozessoren möglich. Dabei kann die Berechnung auf mehrere Signalprozessoren aufgeteilt werden, ohne daß ein Austausch von Zwischenergebnissen erforderlich ist. Außerdem erlaubt der Befehlssatz der eingesetzten Signalprozessoren eine einfache Durchführung der notwendigen Rechen- und Adressenoperationen.

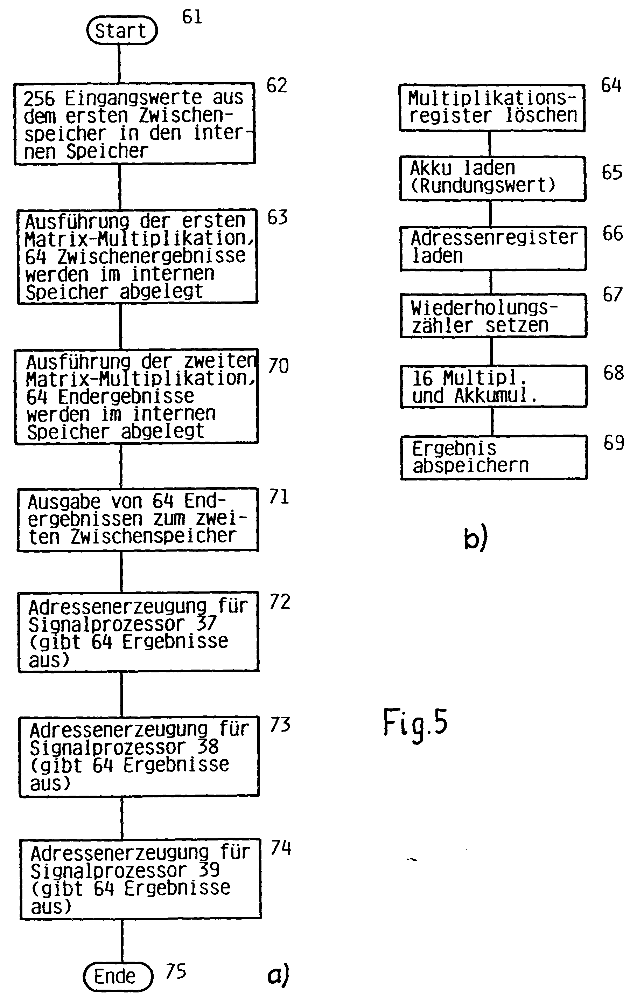

Fig. 5a) zeigt einen Ablaufplan eines Programms, das für den Signalprozessor 36 (Fig. 2) vorgesehen ist. Nach jeweils einem Start 61, der durch das Signal INT ausgelöst wird und mit dem jeweils die Bearbeitung eines Blocks beginnt, werden bei 62 256 Eingangswerte aus dem ersten Zwischenspeicher 31 eingelesen. Danach erfolgt im Programmteil 63 die Ausführung der ersten Matrix-Multiplikation und die Ablage von 64 Zwischenergebnissen im internen Speicher des Signalprozessors. Der Programmteil 63 ist in Fig. 5b) etwas genauer dargestellt. Er beginnt bei 64 mit dem Löschen der Multiplikationsregister, worauf der Akku der CPU bei 65 mit einem Rundungswert geladen wird. Danach werden bei 66 Adressenregister geladen, worauf bei 67 ein Wiederholungszähler gesetzt wird. Im Programmteil 68 erfolgen dann 16 Multiplikationen und eine Akkumulation der Multiplikationsergebnisse. Bei 69 wird das Ergebnis der Akkumulation im internen Speicher abgelegt. Daraufhin erfolgt eine Wiederholung des in Fig. 5b) dargestellten Programmteils für das nächste Zwischenergebnis usw. Nachdem innerhalb des Programmteils 63 alle 64 Zwischenergebnisse im internen Speicher abgelegt wurden, wird bei 70 die zweite Matrix-Multiplikation durchgeführt und deren 64 Ergebnisse als Endergebnisse im internen Speicher abgelegt.

Im Programmteil 71 werden die 64 Endergebnisse aus dem internen Speicher des Signalprozessors 36 an den zweiten Zwischenspeicher 47 (Fig. 2) ausgegeben, wozu im Signalprozessor 36 Adressen für den zweiten Zwischenspeicher 47 erzeugt werden.

In den Programmteilen 72, 73 und 74 adressiert der Signalprozessor 36 den zweiten Zwischenspeicher 47, während die Signalprozessoren 37 bis 39 jeweils ihre 64 Endergebnisse ausgeben. Bei 75 ist das Programm beendet.

Die Signalprozessoren 37 bis 39 arbeiten mit Programmen, welche ebenfalls die Teile 61 bis 70 umfassen. Es werden jedoch keine Adressen erzeugt, so daß die Programmteile 72 bis 74 dort nicht vorhanden sind und der Teil 71 des Programms ein Auslesen der Endergebnisse mittels der zugeführten Adressen beinhaltet.

## Patentansprüche

1. Transformationsschaltung für eine Einrichtung zur Codierung oder Decodierung von Videosignalen, wobei eine blockweise Transformation der Bildelemente, insbesondere eine diskrete Cosinus-Transformation, mit Hilfe einer doppelten Matrix-Multiplikation in der Form B=X^{T}·F^{T} H=B^{T}·F^{T} mit
x Matrix der Bildelemente des zu transformierenden Blocks
F Matrix der Transformationskoeffizienten
B Matrix der Zwischenergebnisse
H Ergebnismatrix
vorgenommen wird, wobei mehrere digitale Signalprozessoren (36, 37, 38, 39) parallel angeordnet sind, in jeweils einem Programmspeicher der digitalen Signalprozessoren eine Transformations-Matrix abgelegt ist, von einem ersten Zwischenspeicher (31) die jeweils einen Block betreffenden Signale jedem der Signalprozessoren zuführbar sind, jeder Signalprozessor (36 bis 39) unabhängig von den anderen Signalprozessoren einen Teil der Ergebnismatrix durch die genannte doppelte Matrix-Multiplikation berechnet und wobei Ausgangssignale der digitalen Signalprozessoren in einen zweiten gemeinsamen Zwischenspeicher (47) einschreibbar sind.

2. Transformationsschaltung nach Anspruch 1, dadurch gekennzeichnet, daß einer der Signalprozessoren (36) zusätzlich eine Adressierung der Zwischenspeicher (31, 47) vornimmt.

3. Transformationsschaltung nach Anspruch 1, dadurch gekennzeichnet, daß in die Arbeitsspeicher aller Signalprozessoren (36 bis 39) gleichzeitig die Signale eines Blocks eingelesen werden.

4. Transformationsschaltung nach Anspruch 1, dadurch gekennzeichnet, daß zur Codierung bzw. Decodierung von Luminanzsignalen vier signalprozessoren (36 bis 39) parallel angeordnet sind, von denen jeweils ein Signalprozessor die Berechnung von jeweils einem Viertel der Ergebnis-Matrix vornimmt.

5. Transformationsschaltung nach Anspruch 1, dadurch gekennzeichnet, daß zur Codierung bzw. Decodierung von Chrominanzsignalen zwei Signalprozessoren parallel angeordnet sind, daß in den Arbeitsspeicher jedes Prozessors zunächst die zu einem Block gehörenden Farbdifferenzsignale eingelesen werden und daß anschließend jeweils eine Hälfte der Ergebnis-Matrix berechnet wird.

## Claims

1. Transformation circuit for a device for encoding or decoding video signals, a block-by-block transformation of the pixels, in particular a discrete cosine transformation, being performed using a double matrix multiplication in the form B=x^{T}·F^{T} H=B^{T}·F^{T} where
x matrix of the pixels of the block to be transformed
F matrix of the transform coefficients
B matrix of the intermediate results
H result matrix,
a plurality of digital signal processors (36, 37, 38, 39) being arranged in parallel, a transform matrix being stored in in each case one station memory of the digital signal processors, the signals which relate to one block in each case being capable of being fed from a first buffer (31) to each of the signal processors, each signal processor (36 to 39) calculating, independently of the other signal processors, a part of the result matrix by means of the aforesaid double matrix multiplication, and it being possible to write output signals of the digital signal processors into a second common buffer (47).

2. Transformation circuit according to Claim 1, characterized in that one of the signal processors (36) additionally performs addressing of the buffers (31, 47).

3. Transformation circuit according to Claim 1, characterized in that the signals of a block are simultaneously read into the main memories of all the signal processors (36 to 39).

4. Transformation circuit according to Claim 1, characterized in that, for the purpose of encoding and decoding luminance signals, four signal processors (36 to 39) are arranged in parallel, in each case one signal processor of which performs the calculation of in each case one quarter of the result matrix.

5. Transformation circuit according to Claim 1, characterized in that, for the purpose of encoding and decoding chrominance signals, two signal processors are arranged in parallel, in that initially the colour difference signals associated with a block are read into the main memory of each processor, and in that in each case one half of the result matrix is subsequently calculated.

## Revendications

1. Circuit de transformation pour une installation de codage ou de décodage de signaux vidéo, pour effectuer une transformation par blocs des éléments image notamment une transformation cosinus discrète à l'aide d'une double multiplication matricielle sous la forme B=X^{T} ·F^{T} H=B^{T} ·F^{T}, avec
X matrice des éléments image du bloc à transformer
F matrice des coefficients de transformation
B matrice des résultats intermédiaires
H matrice des résultats définitifs,
plusieurs processeurs de signaux numériques (36, 37, 38, 39) étant en parallèle et chaque mémoire de programme des processeurs de signaux, numériques contenant une matrice de transformation, une première mémoire intermédiaire (31) fournissant les signaux appartenant chaque fois à un bloc à chacun des processeurs de signaux, chaque processeur de signaux (36-39) calculant indépendamment des autres processeurs de signaux, une partie de la matrice de résultat par une double multiplication matricielle et les signaux de sortie des processeurs de signaux numériques étant enregistrés dans une seconde mémoire intermédiaire commune (47).

2. Circuit de transformation selon la revendication 1, caractérisé en ce que l'un des processeurs de signal (36) effectue en outre un adressage de la mémoire intermédiaire (31, 47).

3. Circuit de transformation selon la revendication 1, caractérisé en ce que simultanément les signaux d'un bloc sont enregistrés dans les mémoires de travail de tous les processeurs de signaux (36-39).

4. Circuit de transformation selon la revendication 1, caractérisé en ce que pour le codage ou le décodage de signaux de luminance on a en parallèle quatre processeurs de signaux (36-39) dont chaque fois un processeur de signal effectue le calcul de chaque fois un quart de la matrice du résultat.

5. Circuit de transformation selon la revendication 1, caractérisé en ce que pour le codage et le décodage des signaux de chrominance on a en parallèle deux processeurs de signaux et dans la mémoire de travail de chaque processeur on enregistre les signaux de différence de couleur appartenant à un bloc puis on calcule chaque fois une moitié de la matrice de résultat.
